# EUROPÄISCHE PATENTSCHRIFT

(11) **EP 2 706 076 B1**
(45) Veröffentlichungstag und Bekanntmachung des Hinweises auf die Patenterteilung: **17.12.2014**
(21) Anmeldenummer: 12183423.8
(22) Anmeldetag: 07.09.2012
(51) Int. Cl.: C08G 59/50, C09D 163/00

(54) **Härtbare Zusammensetzungen auf der Basis von Epoxidharzen ohne Benzylalkohol**
Hardening compounds on the basis of epoxide resins without benzyl alcohol
Compositions durcissables à base de résines époxy sans alcool benzylique

(43) Veröffentlichungstag der Anmeldung: 12.03.2014
(73) Patentinhaber: Evonik Industries AG, 45128 Essen (DE)
(72) Erfinder: Ortelt, Martina, 48249 Dülmen (DE); Spyrou, Emmanouil, 46514 Schermbeck (DE); Pfeffer, Jan Christoph, 63452 Hanau (DE); Fuchsmann, Dirk, 45721 Haltern am See (DE); Kohlstruk, Britta, 48249 Dülmen (DE); Haas, Thomas, 48161 Münster (DE)

(56) Entgegenhaltungen:
- GB-A- 1 019 925
- US-A- 3 055 914
- US-A- 4 639 493
- US-A1- 2011 281 117
- XIAODUN HE ET AL: "EVALUATION OF FURFURYLAMINES AS CURING AGENTS FOR EPOXY RESINS", JOURNAL OF POLYMER SCIENCE, POLYMER CHEMISTRY EDITION, INTERSCIENCE PUBLISHERS, NEW YORK, NY, US, Bd. 30, Nr. 4, 30. März 1992 (1992-03-30), Seiten 533-542, XP000258557, ISSN: 0360-6376

## Beschreibung

Die Erfindung betrifft härtbare Zusammensetzungen umfassend wenigstens ein Epoxidharz und wenigstens einen Härter, wobei es sich bei dem Härter um eine Verbindung der Formeln (I) oder (II) handelt, 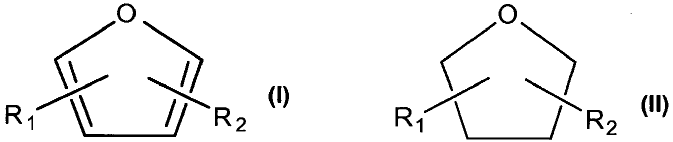 wobei R₁ und R₂ jeweils und unabhängig aus der Gruppe von Substituenten mit der Formel -(CH₂)ₓ-NH₂ ausgewählt sind und x jeweils und unabhängig 0, 1, 2, 3 oder 4 ist, sowie Oberflächen aufweisend derartige Zusammensetzung, Verfahren umfassend Aufbringen eines Beschichtungsmaterials umfassend derartige Zusammensetzungen und die Verwendung derartiger Zusammensetzungen als Oberflächenschutz.

Epoxidharze sind Prepolymere, die pro Molekül zwei oder mehr Epoxidgruppen enthalten. Die Reaktion dieser Harze mit einer Reihe von Härtern führt zu vernetzten Polymeren. Diese Polymere können duroplastisch sein und können in den Bereichen z. B. Civil Engineering (Bauwesen), besonders in Industrieböden, Abdichtungen und Betonsanierungsprodukten, Composites (Faserverbundwerkstoffe), Vergussmassen, Lacke und Klebstoffen, Verwendung finden. Ein Überblick über die Harze und Härter sowie deren Verwendung im Bereich Civil Engineering einschließlich ihrer Eigenschaften findet sich in H. Schuhmann, "Handbuch Betonschutz durch Beschichtungen", Expert Verlag 1992, Seite 396 - 428. Der Einsatz der Harze und Härter für den Bereich Composites wird in P.K.Mallick, "Fiber-Reinforced Composites, Materials, Manufacturing, and Design", CRC Press, Seite 60 - 76 beschrieben.

Neben Epoxidharzen, Aminen und anderen an der Vernetzungsreaktion beteiligten Verbindungen umfassen industrierelevante Zusammensetzungen dieser Art üblicherweise auch nichtreaktive Bestandteile als Hilfsstoffe. Obwohl diese nicht kovalent eingebunden sind, ist davon auszugehen, dass ein gewisser Anteil dieser nichtreaktiven Bestandteile in der Zusammensetzung nach Abschluss der Härtung verbleibt und über einen langen Zeitraum kontinuierlich an die Umgebung abgegeben wird. Sie können daher zur Innenraumbelastung beitragen.

Einen typischen nichtreaktiven Bestandteil härtbarer epoxidhaltiger Zusammensetzungen stellt Benzylalkohol dar. Benzylalkohol ist mit den reaktiven Bestandteilen mischbar und wirkt verdünnend, viskositätsverringernd und damit verlaufsfördernd. Schließlich unterstützt Benzylalkohol die Härtungsreaktion katalytisch.

Vor dem Hintergrund einer Einstufung von Benzylalkohol durch die EU-Decopaint-Richtlinie als VOC (volatile organic compound) besteht jedoch Bedarf, Epoxidsysteme zu entwickeln, die keinen Benzylalkohol benötigen.

Die der Erfindung zu Grunde liegende Aufgabe besteht somit darin, aminische Härter für Epoxidharze zu entwickeln, mit denen Formulierungen erhalten werden, die unter Umgebungstemperaturen mit möglichst geringen Mengen oder bevorzugt ohne die Verwendung von Benzylalkohol ausreichend aushärten.

Eine weitere der Erfindung zu Grunde liegende Aufgabe besteht darin, eine härtbare Zusammensetzung auf Epoxidharzbasis bereitzustellen, wobei einzelne verarbeitungsrelevante Eigenschaften oder die Gesamtheit der verarbeitungsrelevanten Eigenschaften wie möglichst geringe Ausgangsviskosität, ausreichend hohe Härten und ein hoher Umsatz innerhalb von ein bis sieben Tagen bei Raumtemperatur zu erhalten, wobei die Durchhärtung gegenüber vergleichbaren, Benzylalkohol enthaltenden Zusammensetzungen nicht verschlechtert ist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Die der Erfindung zu Grunde liegende Aufgabe wird in einem ersten Aspekt gelöst durch eine härtbare Zusammensetzung umfassend wenigstens ein Epoxidharz und wenigstens einen Härter,
wobei es sich bei dem Härter um eine Verbindung der Formeln (I) oder (II) handelt, 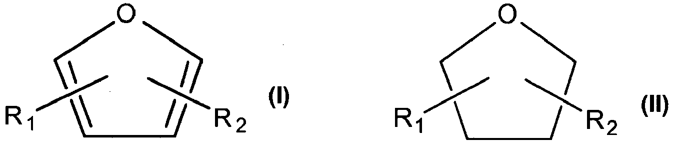 wobei R₁ und R₂ jeweils und unabhängig aus der Gruppe von Substituenten mit der Formel -(CH₂)ₓ-NH₂ ausgewählt sind und x jeweils und unabhängig 0, 1, 2, 3 oder 4 ist.

In einer ersten Ausführungsform des ersten Aspekts wird die Aufgabe gelöst durch eine Zusammensetzung, wobei x in R₁ und R₂ 1 ist.

In einer zweiten Ausführungsform des ersten Aspekts, die auch eine Ausführungsform der ersten Ausführungsform darstellt, wird die Aufgabe gelöst durch eine Zusammensetzung, wobei der Härter um 5-Aminomethyl-2-furfurylamin (HMF-Diamin) ist.

In einer dritten Ausführungsform des ersten Aspekts, die auch eine Ausführungsform der ersten bis zweiten Ausführungsform darstellt, wird die Aufgabe gelöst durch eine Zusammensetzung, wobei das Epoxidharz aus der Gruppe umfassend Epoxidharze auf der Basis von Bisphenol A-diglycidylether, Bisphenol F-diglycidylether und cycloaliphatische Typen ausgewählt ist.

In einer vierten Ausführungsform des ersten Aspekts, die auch eine Ausführungsform der ersten bis dritten Ausführungsform darstellt, wird die Aufgabe gelöst durch eine Zusammensetzung, wobei die Zusammensetzung weniger als 20 g Benzylalkohol pro 100 g der Gesamtheit aller darin enthaltenen Härter umfasst.

In einer fünften Ausführungsform des ersten Aspekts, die auch eine Ausführungsform der ersten bis vierten Ausführungsform darstellt, wird die Aufgabe gelöst durch eine Zusammensetzung, wobei die Zusammensetzung weniger als 4 Gew.-% Benzylalkohol umfasst.

In einer sechsten Ausführungsform des ersten Aspekts, die auch eine Ausführungsform der ersten bis fünften Ausführungsform darstellt, wird die Aufgabe gelöst durch eine Zusammensetzung, wobei die Zusammensetzung keinen Benzylalkohol umfasst.

In einer siebten Ausführungsform des ersten Aspekts, die auch eine Ausführungsform der ersten bis sechsten Ausführungsform darstellt, wird die Aufgabe gelöst durch eine Zusammensetzung, wobei das stöchiometrische Verhältnis der Gesamtheit aller in der Zusammensetzung enthaltenen Epoxidharze zur Gesamtheit aller in der Zusammensetzung enthaltenen Härter 0,7 bis 1,3 beträgt.

In einer achten Ausführungsform des ersten Aspekts, die auch eine Ausführungsform der ersten bis siebten Ausführungsform darstellt, wird die Aufgabe gelöst durch eine Zusammensetzung, wobei das stöchiometrische Verhältnis der Gesamtheit aller in der Zusammensetzung enthaltenen Epoxidharze zur Gesamtheit aller in der Zusammensetzung enthaltenen Härter 0,9 bis 1,1 beträgt.

In einer neunten Ausführungsform des ersten Aspekts, die auch eine Ausführungsform der ersten bis achten Ausführungsform darstellt, wird die Aufgabe gelöst durch eine Zusammensetzung, wobei die Zusammensetzung wenigstens einen weiteren wenigstens zwei oder mehr primäre und/oder sekundäre Amingruppen umfassenden Härter aufweist, bevorzugt einen Härter aus der Gruppe von Härtern umfassend Methylendianilin, N-Aminoethylpiperazin, Isophorondiamin, m-Phenylenbis(methylamin), Trimethylhexamethylendiamin, Polyoxyalkylenamine, Polyaminoamide und Umsetzungsprodukte von Aminen mit Acrylnitril und Mannichbasen umfasst.

In einer zehnten Ausführungsform des ersten Aspekts, die auch eine Ausführungsform der ersten bis neunten Ausführungsform darstellt, wird die Aufgabe gelöst durch eine Zusammensetzung, weiter umfassend wenigstens einen Reaktionsbeschleuniger, bevorzugt aus der Gruppe organischer Säuren oder tertiärer Amine.

In einer elften Ausführungsform des ersten Aspekts, die auch eine Ausführungsform der ersten bis zehnten Ausführungsform darstellt, wird die Aufgabe gelöst durch eine Zusammensetzung, weiter umfassend wenigstens einen Reaktivverdünner, bevorzugt aus der Gruppe mono- oder polyfunktioneller, bei Raumtemperatur flüssiger Epoxidverbindungen.

In einer zwölften Ausführungsform des ersten Aspekts, die auch eine Ausführungsform der ersten bis zwölften Ausführungsform darstellt, wird die Aufgabe gelöst durch eine Zusammensetzung nach einem der Ansprüche 1 bis 13, weiter umfassend Pigmente, Füllstoffe und/oder Additive.

In einem zweiten Aspekt wird die der Erfindung zu Grunde liegende Aufgabe gelöst durch eine Oberfläche, bevorzugt aufweisend Metall, mineralischen Untergrund, Kunststoff, Lack, Polymerbeton, Klebstoff, Faserverbundstoff, Vergussmasse oder Imprägnierung, beschichtet mit der erfindungsgemäßen Zusammensetzung.

In einem dritten Aspekt wird die der Erfindung zu Grunde liegende Aufgabe gelöst durch ein Verfahren zur Beschichtung einer Oberfläche, umfassend das Aufbringen des Beschichtungsmaterials umfassend die Zusammensetzung nach dem ersten Aspekt oder einer Ausführungsform davon auf die Oberfläche.

In einer ersten Ausführungsform des dritten Aspekts wird die Aufgabe gelöst durch ein Verfahren, wobei es sich bei der Oberfläche um eine Oberfläche aufweisend Metall, mineralischen Untergrund, Kunststoff, Lack, Polymerbeton, Klebstoff, Faserverbundstoff, Vergussmasse oder eine Imprägnierung handelt.

In einem vierten Aspekt wird die der Erfindung zu Grunde liegende Aufgabe gelöst durch eine Verwendung der Zusammensetzung nach dem ersten Aspekt oder einer Ausführungsform davon als Oberflächenschutz auf Metall, mineralischen Untergrund, Kunststoff, Lack, Polymerbeton, Klebstoff, Faserverbundstoff, Vergussmasse oder eine Imprägnierung.

In einem fünften Aspekt wird die der Erfindung zu Grunde liegende Aufgabe gelöst durch eine Zusammensetzung erhältlich durch Aushärten der härtbaren Zusammensetzung nach dem ersten Aspekt oder einer Ausführungsform des ersten Aspekts.

Die Erfindung basiert auf der überraschenden Erkenntnis, dass erfindungsgemäße härtbare Zusammensetzungen ohne Benzylalkohol gleichwertige oder sogar verbesserte verarbeitungsrelevante Eigenschaften gegenüber vergleichbaren Zusammensetzungen umfassend Benzylalkohol aus dem Stand der Technik aufweisen.

Für die erfindungsgemäße härtbare Zusammensetzung umfassend wenigstens ein Epoxid ist zunächst essentiell, dass sie wenigstens einen Härter umfasst, wobei es sich bei dem Härter um eine Verbindung der Formeln (I) oder (II) handelt, 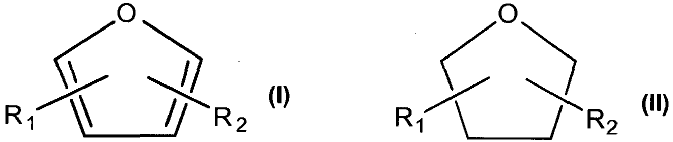 wobei R₁ und R₂ jeweils und unabhängig aus der Gruppe von Substituenten mit der Formel -(CH₂)ₓ-NH₂ ausgewählt sind und x jeweils und unabhängig 0, 1, 2, 3 oder 4 ist. In einer bevorzugten Ausführungsform befindet sich R₁ an Position 1 des Rings, d.h. kovalent gebunden an ein Kohlenstoffatom, das Teil des Fünfringes ist und seinerseits kovalent über eine C-O-Einfachbindung an das Sauerstoffatom des Ringsystems gebunden ist. In einer besonders bevorzugten Ausführungsform befindet sich R₁ an Position 1 des Rings, und R₂ befindet sich an der Position 2, 3 oder, bevorzugt an einer der Positionen 3 und 4. Neben diesem Härter umfasst die Zusammensetzung in einer bevorzugten Ausführungsform wenigstens einen weiteren Härter, bei dem es sich um eine weitere Verbindung der Formeln (I) oder (II) oder aber, bevorzugt, um wenigstens einen anderen Härter als einen gemäß der Formel (I) oder (II) handeln kann.

Als andere Härter kommen sämtliche im Stand der Technik für härtbare Zusammensetzungen umfassend wenigstens ein Epoxid in Frage, insbesondere aminhaltige Härter, die mindestens zwei oder mehr primäre und/oder sekundäre Aminogruppen aufweisen, z. B. Diethylentriamin, Triethylentetramin, Methylendianilin, Bis(aminocyclohexyl)methan, 3,3'-Dimethyl-4,4'-diaminodicyclohexyl-methan, Tricyclo-dodecandiamin, Norbornandiamin, N-Aminoethylpiperazin, Isophorondiamin, m-Phenylenbis(methylamin), 1,3- und/oder 1,4-Bis(aminomethyl)cyclohexan, Trimethylhexamethylendiamin, Polyoxyalkylen-amine, Polyaminoamide, und Umsetzungsprodukte von Aminen mit Acrylnitril und Mannichbasen.

In einer bevorzugten Ausführungsform wird eine Mischung umfassend wenigstens zwei Härter, darunter wenigstens einer gemäß der Formel (I) oder (II), als Härter eingesetzt. Der Anteil des Härters gemäß der Formel (I) oder (II) an der Mischung der wenigstens zwei Härter beträgt dabei in Reihenfolge zunehmender Bevorzugung wenigstens 10, 20, 30, 40, 50, 60, 70, 80, 90 oder 95 Gew.-%.

Ein Weg zur organisch-präparativen Synthese von Verbindungen der Formel (I) und (II) ist in der DE102010030991.5 beschrieben. Diese Verbindungen lassen sich auch biotechnologisch durch Oxidation entsprechender zyklischer Alkohole durch geeignete Oxidasen gefolgt von einer Transaminierung durch Transaminasen herstellen. Ein geeignetes Verfahren ist beispielsweise in der EP11170011.8 beschrieben.

Als Epoxidharz kommen erfindungsgemäß alle Epoxidharze in Frage, die mit Aminen gehärtet werden können. Zu den Epoxidharzen zählen z. B. Polyepoxide auf Basis von Bisphenol A-diglycidylether, Bisphenol F-diglycidylether oder cycloaliphatische Typen wie z. B. 3,4-Epoxycyclohexyl-epoxyethan oder 3,4-Epoxycyclohexylmethyl-3,4-epoxy-cyclohexancarboxylat.

Vorzugsweise wird in erfindungsgemäßer härtbarer Zusammensetzung ein Epoxidharz eingesetzt, das aus der Gruppe auswählt ist, die Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexancarboxylat umfasst, wobei Bisphenol A basierte Epoxidharze und Bisphenol F basierte Epoxidharze besonders bevorzugt sind. Derartige Verbindungen sind im Handel erhältlich.

Für die Ausführung der erfindungsgemäßen Lehre ist es essentiell, dass ein bestimmtes Verhältnis zwischen der Gesamtheit der Epoxidharze und Gesamtheit der Härter eingehalten wird. In einer bevorzugten Ausführungsform ist das Verhältnis ein stöchiometrisches Verhältnis. In einer noch bevorzugteren Ausführungsform beträgt das stöchiometrische Verhältnis der Gesamtheit der Epoxidharze in der Zusammensetzung zu der Gesamtheit der Härter in der Zusammensetzung 1: 0,7 bis 1:1,3, noch bevorzugter 1:0,9 bis 1:1,1 und am bevorzugtesten 1: 1.

Im Stand der Technik beschriebene härtbare Zusammensetzungen umfassend Epoxidharz und Aminhärter enthalten gewöhnlich ein Modifizierungsmittel, meist Benzylalkohol. Modifizierungsmittel wie Benzylalkohol können dazu dienen, die Bindemitteleigenschaften wie Durchhärtung, Verlauf und das Harz-Härter-Mischungsverhältnis einzustellen. Ein besonderer Vorteil der erfindungsgemäßen Lehre besteht darin, dass die Menge des als Modifizierungsmittel eingesetzten Benzylalkohols verringert oder das Modifizierungsmittel, bevorzugt der Benzylalkohol, vollständig ausgelassen werden kann, ohne dass es zu einer Beeinträchtigung der Gesamtheit der verarbeitungsrelevanten Eigenschaften kommt. In einer bevorzugten Ausführungsform Zusammensetzung in der Reihenfolge zunehmender Bevorzugung weniger als 20 g, 15 g, 10 g, 5 g, oder 1 g Benzylalkohol pro 100 g der Gesamtheit aller darin enthaltenen Härter. In einer weiteren bevorzugten Ausführungsform umfasst die Zusammensetzung in der Reihenfolge zunehmender Bevorzugung weniger als 10, 8, 6, 4, 3, 2, 1 oder 0,5 Gew.-% Benzylalkohol. In einer bevorzugtesten Ausführungsform umfasst die erfindungsgemäße Zusammensetzung keine detektieren Mengen an Benzylalkohol.

In einer bevorzugten Ausführungsform umfasst die erfindungsgemäße härtbare Zusammensetzung wenigstens einen Reaktivverdünner. In einer bevorzugten Ausführungsform versteht man unter dem Begriff "Reaktivverdünner", wie hierin verwendet, eine niedrigviskose, epoxidgruppenhaltige Verbindung, die mit Epoxidharz und Härter verträglich ist und eine optimale Verdünnung bewirkt. Der Reaktivverdünner ist bevorzugt aus der Gruppe mono-, bi- oder polyfunktioneller, bei Raumtemperatur flüssiger Epoxidverbindungen, z.B. Butylglycidether, Phenylglycidether, Glycidether der Versatic-Säure, C12-C14-Glycidether, C13-C15-Glycidether, p-tert-Butyl-Phenylglycidether, 1,6-Hexandiglycidether, 1,4-Butandiglycidether, Neopentlyglykoldiglycidether, Glycerintriglycidether, Pentaerythropoly-glycidether, Trimethylolpropantriglycidether und Kresylglycidether.

In einer weiteren bevorzugten Ausführungsform umfasst die die erfindungsgemäße härtbare Zusammensetzung wenigstens einen Reaktionsbeschleuniger, bevorzugt aus der Gruppe organischer Säuren oder tertiärer Amine, z.B. Salicylsäure, Aminoethylpiperazin, Tris-(N,N-dimethylaminomethyl)-phenol.

In einer weiteren bevorzugten Ausführungsform umfasst die erfindungsgemäße härtbare Zusammensetzung wenigstens ein Lösemittel, z.B. Xylol oder iso-Propanol.

In einer weiteren bevorzugten Ausführungsform umfasst die die erfindungsgemäße härtbare Zusammensetzung Pigmente, Füllstoffe und/oder Additive.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

### Beispiel: Herstellung und Vergleich der verarbeitungsrelevanten Eigenschaften zwischen einer erfindungsgemäßen und einer im Stand der Technik beschriebenen härtbaren Zusammensetzung

Das nachfolgende Beispiel zeigt Ergebnisse im Vergleich zu Isophorondiamin (IPD), einem Amin, das als Industriestandard z. B. für auf Epoxidharz basierenden Industriefußböden angesehen wird.
Zur Verarbeitung und Prüfung wurden alle Komponenten unter Rühren gut miteinander vermischt.

**Tabelle 1: Raumtemperaturhärtung von HMF-Diamin im Vergleich zu Isophorondiamin**

| | **IPD basierend mit Benzylalkohol** | **IPD basierend ohne Benzylalkohol** | **HMF-Diamin basierend** |
|---|---|---|---|
| **Rezepturbestandteile (in g)** | | | |
| Isophorondiamin (IPD) | 42,6 | 42,6 | |
| 5-Aminomethyl-2-furfurylamin (HMF-Diamin) | | | 31,5 |
| Benzylalkohol | 37,5 | - | - |
| Epoxidharz (Standardharz auf Basis Bisphenol A; z. B. Epikote 828) | 188 | 188 | 188 |

| **Eigenschaften** | | | |
|---|---|---|---|
| Ausgangsviskosität bei 23°C [mPa*s]; DIN 53019 | 1200 | 2400 | 1500 |
| Peak-Temperatur, 100g-Ansatz [°C] | 40 | 30 | 175 |
| Zeit zum Erreichen der max. Peak-Temperatur [min] | 80 | 215 | 140 |
| Gelzeit bei 23°C [min] 100 g-Ansatz im Wasserbad | 65 | ca. 240 | 130 |
| | | | |

| ***Prüfungen nach Härtung bei 23°C, 50 % rel. Luftfeuchte*** | | | |
|---|---|---|---|
| | | | |
| Umsatz nach 7 Tagen (DSC; DIN EN ISO 11357-1) | 93 % | 72% | 85 % |
| Tg nach 7 Tagen (DSC; DIN EN ISO 11357-1) | 49°C | 51°C | 51°C |
| | | | |
| Wärmeformbeständigkeit [°C] nach 1 Tag DIN EN ISO 75 | spröde | spröde | spröde |
| Wärmeformbeständigkeit [°C] nach 2 Tagen DIN EN ISO 75 | 48°C | spröde | 48°C |
| Wärmeformbeständigkeit [°C] nach 7 Tagen DIN EIN ISO 75 | 54°C | spröde | 51°C |
| | | | |
| Shore Härte D nach 1 Tag DIN EN ISO 868 | spröde | spröde | spröde |
| Shore Härte D nach 2 Tagen DIN EN ISO 868 | 80 | spröde | 83 |
| Shore Härte D nach 7 Tagen DIN EN ISO 868 | 82 | spröde | 83 |
| | | | |
| Aussehen der Oberfläche visuell | OK | OK | OK |

### Ergebnisse:

Um einen ausreichenden Umsatz zu erhalten, benötigt die IPD basierende Formulierung Benzylalkohol.

Bei Verwendung von HMF-Diamin ist es möglich, ohne den Einsatz von Modifizierungsmitteln wie Benzylalkohol nach 7 Tagen Umsätze von ca. 85 % zu erreichen. Damit liegt man in einem für die Praxis meist akzeptablen Bereich.

Im Vergleich zur IPD basierenden Formulierung ohne Benzylalkohol ist die auf HMF-Diamin basierende härtbare Zusammensetzung auf Epoxidbasis deutlich niedrig viskoser und ist reaktiver.

Mit HMF-Diamin statt IPD als Härter erzielt man weiterhin ohne die Verwendung von Benzylalkohol eine gute Durchhärtung (Wärmeformbeständigkeiten, Shore-Härten).

Es lassen sich Beschichtungen mit guten Oberflächenqualitäten realisieren.

## Patentansprüche

1. Härtbare Zusammensetzung umfassend wenigstens ein Epoxidharz und wenigstens einen Härter,
wobei es sich bei dem Härter um eine Verbindung der Formeln (I) oder (II) handelt, 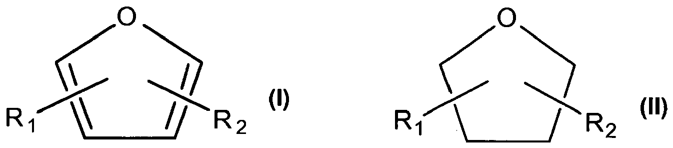 wobei R₁ und R₂ jeweils und unabhängig aus der Gruppe von Substituenten mit der Formel -(CH₂)ₓ-NH₂ ausgewählt sind und x jeweils und unabhängig 0, 1, 2, 3 oder 4 ist.

2. Zusammensetzung nach Anspruch 1, wobei x in R₁ und R₂ 1 ist.

3. Zusammensetzung nach einem der Ansprüche 1 bis 2, wobei der Härter 5-Aminomethyl-2-furfurylamin ist.

4. Zusammensetzung nach einem der Ansprüche 1 bis 3, wobei das Epoxidharz aus der Gruppe umfassend Epoxidharze auf der Basis von Bisphenol A-diglycidylether, Bisphenol F-diglycidylether und cycloaliphatische Typen ausgewählt ist.

5. Zusammensetzung nach einem der Ansprüche 1 bis 4, wobei die Zusammensetzung weniger als 20 g Benzylalkohol pro 100 g der Gesamtheit aller darin enthaltenen Härter umfasst.

6. Zusammensetzung nach einem der Ansprüche 1 bis 5, wobei die Zusammensetzung weniger als 4 Gew.-% Benzylalkohol umfasst.

7. Zusammensetzung nach einem der Ansprüche 1 bis 5, wobei die Zusammensetzung keinen Benzylalkohol umfasst.

8. Zusammensetzung nach einem der Ansprüche 1 bis 7, wobei das stöchiometrische Verhältnis der Gesamtheit aller in der Zusammensetzung enthaltenen Epoxidharze zu der Gesamtheit aller in der Zusammensetzung enthaltenen Härter 0,7 bis 1,3 beträgt.

9. Zusammensetzung nach einem der Ansprüche 1 bis 8, wobei das stöchiometrische Verhältnis der Gesamtheit der Epoxidharze in der Zusammensetzung zu der Gesamtheit der Härter in der Zusammensetzung 0,9 bis 1,1, bevorzugt 1 beträgt.

10. Zusammensetzung nach einem der Ansprüche 1 bis 9, wobei die Zusammensetzung wenigstens einen weiteren wenigstens zwei oder mehr primäre und/oder sekundäre Amingruppen umfassenden Härter aufweist, bevorzugt einen Härter aus der Gruppe von Härtern umfassend Methylendianilin, N-Aminoethylpiperazin, Isophorondiamin, m-Phenylenbis(methylamin), 1,3- und/oder 1,4 Bis(aminomethyl)cyclohexan, Trimethylhexamethylendiamin, Polyoxyalkylenamine, Polyaminoamide und Umsetzungsprodukte von Aminen mit Acrylnitril und Mannichbasen umfasst.

11. Zusammensetzung nach einem der Ansprüche 1 bis 10, weiter umfassend wenigstens einen Reaktionsbeschleuniger, bevorzugt aus der Gruppe organischer Säuren oder tertiärer Amine.

12. Zusammensetzung nach einem der Ansprüche 1 bis 11, weiter umfassend wenigstens einen Reaktivverdünner, bevorzugt aus der Gruppe mono- oder polyfunktioneller, bei Raumtemperatur flüssiger Epoxidverbindungen.

13. Zusammensetzung nach einem der Ansprüche 1 bis 12, weiter umfassend Pigmente, Füllstoffe und/oder Additive.

14. Oberfläche, bevorzugt aufweisend Metall, mineralischen Untergrund, Kunststoff, Lack, Polymerbeton, Klebstoff, Faserverbundstoff, Vergussmasse oder Imprägnierung, beschichtet mit einer Zusammensetzung nach einem der Ansprüche 1 bis 12.

15. Verfahren zur Beschichtung einer Oberfläche, umfassend das Aufbringen des Beschichtungsmaterials umfassend die Zusammensetzung nach einem der Ansprüche 1 bis 13 auf die Oberfläche.

16. Verfahren nach Anspruch 15, wobei es sich bei der Oberfläche um eine Oberfläche aufweisend Metall, mineralischen Untergrund, Kunststoff, Lack, Polymerbeton, Klebstoff, Faserverbundstoff, Vergussmasse oder eine Imprägnierung handelt.

17. Verwendung der Zusammensetzung nach einem der Ansprüche 1 bis 13 als Oberflächenschutz auf Metall, mineralischen Untergrund, Kunststoff, Lack, Polymerbeton, Klebstoff, Faserverbundstoff, Vergussmasse oder als Imprägnierung.

18. Zusammensetzung erhältlich durch Aushärten der härtbaren Zusammensetzung nach einem der Ansprüche 1 bis 13.

## Claims

1. Curable composition comprising at least one epoxy resin and at least one hardener
wherein the hardener is a compound of formula (I) or (II) 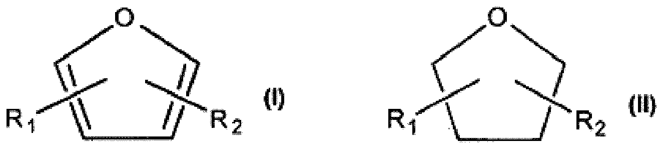 where R₁ and R₂ are each independently selected from the group of substituents having the formula -(CH2)ₓ-NH₂ and x is in each case and independently 0, 1, 2, 3 or 4.

2. Composition according to Claim 1 wherein x in R₁ and R₂ is 1.

3. Composition according to either of Claims 1 and 2 wherein the hardener is 5-aminomethyl-2-furfurylamine.

4. Composition according to any of Claims 1 to 3 wherein the epoxy resin is selected from the group comprising epoxy resins based on bisphenol A diglycidyl ether, bisphenol F diglycidyl ether and cycloaliphatic types.

5. Composition according to any of Claims 1 to 4 wherein the composition comprises less than 20 g of benzyl alcohol per 100 g of the entirety of all hardeners comprised therein.

6. Composition according to any of Claims 1 to 5 wherein the composition comprises less than 4 wt% of benzyl alcohol.

7. Composition according to any of Claims 1 to 5 wherein the composition comprises no benzyl alcohol.

8. Composition according to any of Claims 1 to 7 wherein the stoichiometric ratio of the entirety of all epoxy resins comprised in the composition to the entirety of all hardeners comprised in the composition is from 0.7 to 1.3.

9. Composition according to any of Claims 1 to 8 wherein the stoichiometric ratio of the entirety of the epoxy resins in the composition to the entirety of the hardeners in the composition is from 0.9 to 1.1, preferably 1.

10. Composition according to any of Claims 1 to 9 wherein the composition comprises at least one further hardener comprising at least two or more primary and/or secondary amine groups, preferably a hardener selected from the group of hardeners comprising methylenedianiline, N-aminoethylpiperazine, isophorone diamine, m-phenylenebis(methylamine), 1,3- and/or 1,4-bis(aminomethyl)cyclohexane, trimethylhexamethylenediamine, polyoxyalkyleneamines, polyaminoamides and reaction products of amines with acrylonitrile and Mannich bases.

11. Composition according to any of Claims 1 to 10 further comprising at least one reaction accelerant preferably selected from the group consisting of the organic acids and the tertiary amines.

12. Composition according to any of Claims 1 to 11 further comprising at least one reactive diluent preferably selected from the group consisting of the mono- and polyfunctional epoxide compounds liquid at room temperature.

13. Composition according to any of Claims 1 to 12 further comprising pigments, fillers and/or additives.

14. Surface preferably comprising metal, mineral substrate, plastic, paint/varnish, polymer concrete, adhesive, fibre composite, potting composition or impregnation and coated with a composition according to any of Claims 1 to 12.

15. Method of coating a surface comprising applying to the surface the coating material comprising the composition according to any of Claims 1 to 13.

16. Method according to Claim 15 wherein the surface is a surface comprising metal, mineral substrate, plastic, paint/varnish, polymer concrete, adhesive, fibre composite, potting composition or an impregnation.

17. Use of the composition according to any of Claims 1 to 13 as surface protection on metal, mineral substrate, plastic, paint/varnish, polymer concrete, adhesive, fibre composite, potting composition or as an impregnation.

18. Composition obtainable by curing the curable composition according to any of Claims 1 to 13.

## Revendications

1. Composition durcissable comprenant au moins une résine époxyde et au moins un durcisseur, où il s'agit, pour le durcisseur, d'un composé des formules (I) ou (II) 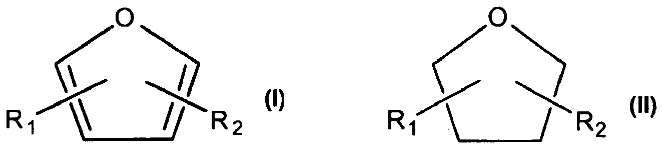 dans lesquelles R₁ et R₂ sont choisis à chaque fois et indépendamment dans le groupe de substituants présentant la formule - (CH₂)ₓ-NH₂ et x vaut à chaque fois et indépendamment 0, 1, 2, 3 ou 4.

2. Composition selon la revendication 1, x dans R₁ et R₂ valant 1.

3. Composition selon l'une quelconque des revendications 1 à 2, le durcisseur étant la 5-aminométhyl-2-furfurylamine.

4. Composition selon l'une quelconque des revendications 1 à 3, la résine époxyde étant choisie dans le groupe comprenant les résines époxydes à base de bisphénol A-diglycidyléther, de bisphénol F-diglycidyléther et les types cycloaliphatiques.

5. Composition selon l'une quelconque des revendications 1 à 4, la composition comprenant moins de 20 g d'alcool benzylique par 100 g de la totalité de tous les durcisseurs qui sont contenus.

6. Composition selon l'une quelconque des revendications 1 à 5, la composition comprenant moins de 4% en poids d'alcool benzylique.

7. Composition selon l'une quelconque des revendications 1 à 5, la composition ne comprenant pas d'alcool benzylique.

8. Composition selon l'une quelconque des revendications 1 à 7, le rapport stoechiométrique de la totalité de toutes les résines époxydes contenues dans la composition à la totalité de tous les durcisseurs contenus dans la composition valant 0,7 à 1,3.

9. Composition selon l'une quelconque des revendications 1 à 8, le rapport stoechiométrique de la totalité des résines époxydes dans la composition à la totalité des durcisseurs contenus dans la composition valant 0,9 à 1,1, de préférence 1.

10. Composition selon l'une quelconque des revendications 1 à 9, la composition présentant au moins un autre durcisseur comprenant au moins deux ou plus de deux groupes amine primaire et/ou secondaire, de préférence un durcisseur du groupe des durcisseurs comprenant la méthylènedianiline, la N-aminoéthylpipérazine, l'isophoronediamine, la m-phénylènebis(méthylamine), le 1,3-bis(aminométhyl)cyclohexane et/ou le 1,4-bis(aminométhyl)cyclohexane, la triméthylhexaméthylènediamine, les polyoxyalkylèneamines, les polyaminoamides et les produits de transformation d'amines avec de l'acrylonitrile et des bases de Mannich.

11. Composition selon l'une quelconque des revendications 1 à 10, comprenant en outre au moins un accélérateur de réaction, de préférence du groupe des acides organiques ou des amines tertiaires.

12. Composition selon l'une quelconque des revendications 1 à 11, comprenant en outre au moins un diluant réactif, de préférence du groupe des composés époxydes monofonctionnels ou polyfonctionnels, liquides à température ambiante.

13. Composition selon l'une quelconque des revendications 1 à 12, comprenant en outre des pigments, des charges et/ou des additifs.

14. Surface, présentant de préférence un métal, un substrat minéral, un matériau synthétique, une laque, un béton polymère, un adhésif, un matériau composite à base de fibres, une masse de scellement ou une imprégnation, revêtue par une composition selon l'une quelconque des revendications 1 à 12.

15. Procédé pour le revêtement d'une surface, comprenant l'application du matériau de revêtement comprenant la composition selon l'une quelconque des revendications 1 à 13 sur la surface.

16. Procédé selon la revendication 15, ou il s'agit, pour la surface, d'une surface présentant un métal, un substrat minéral, un matériau synthétique, une laque, un béton polymère, un adhésif, un matériau composite à base de fibres, une masse de scellement ou une imprégnation.

17. Utilisation de la composition selon l'une quelconque des revendications 1 à 13, comme protection de surface sur du métal, un substrat minéral, un matériau synthétique, une laque, un béton polymère, un adhésif, un matériau composite à base de fibres, une masse de scellement ou comme imprégnation.

18. Composition pouvant être obtenue par durcissement de la composition durcissable selon l'une quelconque des revendications 1 à 13.
